Europäisches Patentamt

European Patent Office

Office européen des brevets

(19)

(11) Numéro de publication: **0 289 427**

**A1**

(12)

# DEMANDE DE BREVET EUROPEEN

(21) Numéro de dépôt: 88401044.8

(22) Date de dépôt: 28.04.88

(51) Int. Cl.⁴: **G 06 K 11/06**

(30) Priorité: 29.04.87 FR 8706100

(43) Date de publication de la demande:
02.11.88 Bulletin 88/44

(84) Etats contractants désignés:
AT BE CH DE ES FR GB GR IT LI LU NL SE

(71) Demandeur: PHOTONETICS
52 Avenue de l'Europe
F-78160 Marly le Roi (FR)

(72) Inventeur: Arditty, Hervé
27 Avenue de l'Abreuvoir
F-78160 Marly le Roi (FR)

Graindorgez, Philippe
2 Square de Genêts
F-78470 Magny Les Hameaux (FR)

le Boudec, Gilles
14 rue du Viel Abreuvoir
F-78100 Saint Germain en Laye (FR)

(74) Mandataire: Thibon-Littaye, Annick
Cabinet A. THIBON-LITTAYE 11 rue de l'Etang
F-78160 Marly-le-Roi (FR)

(54) Procédé et dispositif d'exploitation du signal d'écran d'un écran tactile.

(57) Procédé d'exploitation d'un signal d'écran (E) produit par un écran tactile de type optique, en synchronisme avec une séquence de balayage trame par trame de l'écran, pour y déceler la position d'un organe pointeur amené sur l'écran, caractérisé en ce qu'il consiste essentiellement, pour une série de portions du signal de durée déterminée à chaque trame, provenant de zones d'écran différentes, à examiner les variations de niveau du signal sur au moins trois trames successives, et à produire un signal d'apparition de l'organe pointeur (H) sélectivement lorsque cet examen fait apparaître une augmentation de niveau à la fois relativement importante et de progression relativement rapide par rapport à des fluctuations non significatives.

FIG.1

EP 0 289 427 A1

# Description

## PROCEDE ET DISPOSITIF D'EXPLOITATION DU SIGNAL D'ECRAN D'UN ECRAN TACTILE

Des travaux importants sont en cours dans le développement de ce que l'on est convenu d'appeler des écrans tactiles, ou "touch sensitive screens" en anglais. Ces écrans tactiles ont essentiellement pour fonction de permettre la transmission d'informations à un ordinateur en relation avec la position d'un organe pointeur, tel que le doigt d'un utilisateur, amené contre l'écran d'un moniteur associé à l'ordinateur, en contact avec celui-ci ou à proximité immédiate.

Pour repérer la position de l'organe pointeur sur la surface de l'écran, différentes techniques ont été proposées. Certaines utilisent des fils conducteurs en deux réseaux perpendiculaires ou des faisceaux lumineux croisés, dont ceux qui sont interceptés traduisent les coordonnées X et Y de l'organe pointeur. Elles demandent des équipements fort complexes, dont le fonctionnement est souvent perturbé, alors qu'il suffit de détecter que l'organe pointeur est présent en un endroit quelconque de l'écran pour connaître sa position spatiale en déterminant l'instant de cette détection par rapport à la séquence du balayage du moniteur, effectué ligne à ligne et trame par trame dans la commande du pinceau lumineux éclairant l'écran.

L'invention s'intéresse plus spécialement aux écrans tactiles utilisant cette dernière technique, ce qui est le cas notamment des écrans tactiles de type optique, dans lesquels une plaque transparente placée devant l'écran constitue un guide d'ondes, conduisant jusqu'à des détecteurs situés sur les bords de la plaque, la lumière du pinceau de balayage, pour la part qui en est renvoyée par diffusion par l'organe pointeur sous l'angle correspondant aux conditions d'une réflexion interne totale.

Les écrans tactiles optiques ainsi conçus sont dotés de nombreux avantages, notamment dans leur simplicité de construction et dans leur sécurité d'emploi. Dans l'exploitation du signal d'écran fourni par les détecteurs, il n'est pas difficile, non plus, de se référer aux tops de synchronisation ligne et aux tops de retour trame des séquences de balayage de l'écran. Par contre, des problèmes se posent au niveau de la sensibilité et de la reproductibilité des informations obtenues. Ils sont dûs au fait que même en l'absence de tout toucher de l'organe pointeur (contact du doigt notamment), le signal présente déjà un niveau relativement élevé, et de plus irrégulier d'un point à l'autre de l'écran, par suite de la diffusion intrinsèque de la lumière dans la plaque guide d'ondes, par suite aussi de l'existence de rayures ou d'imperfections en des zones variables de l'écran. Il arrive donc que la présence de l'organe pointeur soit ignorée, et sa détection est moins bonne en certaines zones de l'écran qu'en d'autres. De plus, le manque d'uniformité de la sensibilité ne se traduit pas seulement d'un point à l'autre de l'écran, mais en outre dans le temps, quand interviennent des taches ou salissures laissées sur l'écran, lesquelles conduisent alors à de fausses détections.

Pour résoudre ces problèmes, on a d'abord envisagé d'imposer un seuil de détection pour ne retenir comme témoins d'un toucher local que les augmentations du signal dépassant ce seuil. Mais il est apparu impossible de fixer un seuil uniforme sans entraîner une irrégularité inadmissible de la sensibilité, avec souvent des zones d'écran complètement insensibles, où l'augmentation du signal par la présence de l'organe pointeur ne suffit pas à franchir le seuil. C'est le cas de la méthode décrite dans la demande de brevet européen 0 196 187 qui propose des circuits électroniques associés à un écran tactile qui mettent en oeuvre un procédé de détermination d'un seuil de déclenchement. Ce procédé détermine un niveau de seuil unique pour la totalité de l'écran, niveau qui est obtenu en prenant le maximum d'intensité sur quatre trames successives. Ce procédé, si il permet d'éliminer les déclenchements dus à l'apparition de salissures telles que des traces de doigts sur l'écran, a l'inconvénient de diminuer la sensibilité de l'ensemble de l'écran par l'augmentation du seuil de déclenchement.

On a ensuite proposé de déterminer les zones d'écran où l'augmentation du signal est significative d'un toucher en comparant ce signal à un signal de référence préalablement mis en mémoire en l'absence de tout toucher. Cette méthode est décrite dans le brevet américain n° 4 305 071. Elle n'est pas encore satisfaisante, car il est en général très difficile d'être assuré de l'absence totale de l'organe pointeur à l'instant de l'enregistrement du signal de référence, d'autant que cet enregistrement devrait être renouvelé après chaque toucher pour prendre en compte les taches de gras souvent laissées par le doigt et les discerner de véritables touchers ultérieurs.

La présente invention apporte une solution à ces difficultés en introduisant dans l'exploitation du signal d'écran, une fonction d'auto-adaptation par filtre récursif qui conduit à détecter non pas le toucher matérialisé par la présence de l'organe pointeur (soit en particulier la présence du doigt), mais son apparition, donc l'augmentation rapide de l'intensité du signal, en un endroit déterminé de l'écran, d'une trame de balayage à une autre.

Dans la pratique de l'invention, on décompose fictivement la surface de l'écran en éléments, en distinguant dans le signal d'écran obtenu à chaque trame de balayage des éléments successifs de durée déterminée, et pour chacune des trames successives, on valide comme témoignant de l'apparition de l'organe pointeur, seulement les augmentations de niveau du signal qui sont significatives par rapport à la trame précédente pour le même élément d'écran.

Le caractère significatif de cette comparaison peut être apprécié en appliquant un seuil minimal que la différence constatée doit dépasser pour être prise en compte. Cette disposition permet de valider ainsi les augmentations du niveau du signal pour un élément déterminé qui se produisent pratiquement dans le temps d'une seule trame, avec une différence de niveau supérieure au seuil minimal. Cependant, les variations de niveau dûes à l'apparition de l'organe pointeur, ne respectent pas en général cette condition. Au contraire, l'approche progressive de l'organe pointeur entraîne une augmentation de niveau répartie sur plusieurs trames, alors même qu'ensuite, l'organe pointeur reste en pratique toujours présent sur un grand nombre de trames. Il en résulte que l'augmentation de niveau d'une trame à la suivante, pendant le temps de montée correspondant à l'apparition de l'organe pointeur, peut être du même ordre de grandeur que l'augmentation de niveau d'une trame à la suivante résultant de fluctuations perturbatrices.

L'invention propose donc en plus d'apprécier le caractère significatif de la comparaison ci-dessus en examinant la progression du niveau du signal sur plusieurs trames, de manière à distinguer les augmentations rapides qui sont liées à l'apparition de l'organe pointeur, des augmentations lentes qui doivent être négligées. Pour une variation de trame à trame qui reste faible, les premières se traduisent par une augmentation totale sur plusieurs trames qui est relativement élevée.

Conformément à l'invention, ce résultat peut être obtenu en comparant une valeur courante du signal, à une valeur mémoire dans laquelle tout ou partie de toute augmentation de niveau du signal d'une trame à la suivante, pour un élément déterminé, est prise en compte avec un retard de plusieurs trames. On entend par là que ce retard est d'au moins deux trames, ce qui établit la nouveauté de l'invention par rapport aux techniques connues, car dans celles-ci la valeur du signal est comparée à celle qu'il y avait à la trame précédente et le retard serait donc d'une seule trame. On notera d'autre part que le retard imposé ne porte pas toujours nécessairement sur la totalité de la différence relevée entre valeur courante et valeur mémoire de la trame précédente, car il est au contraire souvent plus commode que l'augmentation constatée soit prise en compte partiellement dans la valeur mémoire et répartie de la sorte sur plusieurs trames, ce qui cause néanmoins un retard de plusieurs trames avant que la valeur mémoire atteigne la valeur courante augmentée.

Ainsi l'invention a pour objet un procédé d'exploitation d'un signal d'écran produit par un écran tactile de type optique, en synchronisme avec une séquence de balayage trame par trame de l'écran, pour y déceler la position d'un organe pointeur amené sur l'écran, caractérisé en ce qu'il consiste essentiellement, pour une série de portions du signal de durée déterminée à chaque trame, provenant de zones d'écran différentes, à examiner les variations de niveau du signal sur au moins trois trames successives, et à produire un signal d'apparition de l'organe pointeur sélectivement lorsque cet examen fait apparaître une augmentation de niveau à la fois relativement importante et de progression relativement rapide par rapport à des fluctuations non significatives.

De préférence, ce procédé se caractérise en outre en ce que ledit examen s'effectue en comparant répétitivement à chaque trame une valeur courante du signal à une valeur mémoire qui est élaborée pour chaque zone d'écran et à laquelle on applique les variations de niveau du signal en en différant une partie d'un retard de plusieurs trames, au moins si ces variations sont des augmentations, et en ce que ledit signal d'apparition de l'organe pointeur est produit si la valeur courante est supérieure à la valeur mémoire d'au moins un seuil déterminé.

Un retard d'au moins deux trames correspond à un examen sur au moins trois trames successives. Cependant il est préférable que ce retard soit d'un plus grand nombre de trames, par exemple entre 5 et 20 trames de 20 millisecondes chacune, de sorte qu'il s'étende sur une durée intermédiaire entre la durée minimale d'une présence de l'organe pointeur et le temps de montée des fluctuations de niveau qui ne sont pas significatives.

Plusieurs solutions différentes permettant d'appliquer un tel retard à la valeur mémoire seront proposées, conformément à l'invention. Elles peuvent être appliquées chacune individuellement, mais elle peuvent aussi, et de préférence, être appliquées dans leurs différentes combinaisons, comme il apparaîtra plus loin.

La meilleure solution dans le principe consiste à utiliser pour comparaison avec la valeur courante, une valeur mémoire conservée identique à ce qu'était la valeur courante, pour la même zone, plusieurs trames auparavant (au moins deux). Mais, du moins avec les technologies actuelles, ceci ne peut être réalisé pratiquement qu'en ayant recours à des microprocesseurs coûteux. Cette solution peut néanmoins se justifier quand on a besoin d'une grande sensibilité pour des signaux subissant de faibles variations.

Une seconde solution consiste donc schématiquement, à étaler dans le temps, le cumul dans la valeur mémoire, des variations de niveau du signal constatées d'une trame à la suivante, en appliquant à chaque trame un facteur réducteur à ces variations (au moins quand il s'agit d'augmentations) pour faire converger progressivement la valeur mémoire vers la valeur courante sur un temps de plusieurs trames.

Une troisième solution consiste schématiquement à déterminer la valeur maximale atteinte par la valeur courante du signal dans la zone considérée sur un groupe de plusieurs trames et à utiliser cette valeur maximale comme valeur mémoire dans le groupe suivant de trames.

Dans la mise en oeuvre de chacune de ces solutions, le seuil minimal qui intervient dans la comparaison entre la valeur courante et la valeur mémoire peut prendre, soit une valeur fixe déterminée à l'avance, soit une valeur variable déterminée par rapport à la valeur courante ou à la valeur mémoire.

Dans sa forme de mise en oeuvre pratique préférée, l'invention a pour objet un procédé d'exploitation d'un signal d'écran produit par un écran tactile de type optique, en synchronisme avec une séquence de balayage trame par trame de l'écran, pour y déceler la position d'un organe pointeur amené sur l'écran, caractérisé en ce qu'il consiste principalement :

- à attribuer en permanence une valeur courante au signal d'écran en fonction de son niveau à chaque instant ;

- à soumettre le signal d'écran répétitivement pour chaque trame à un traitement d'une série de portions du signal, de durée déterminée, provenant de zones d'écran différentes, ledit traitement comportant au moins :

. une étape d'évaluation consistant à attribuer à chacune desdites portions une valeur de zone en fonction du niveau du signal à chaque instant ;

. une étape de mémorisation consistant à enregistrer, jusqu'à la trame suivante, des valeurs mémoire élaborées respectivement à partir desdites valeurs de zone ;

. une étape de filtrage, où chaque valeur de zone est comparée à la valeur mémoire enregistrée pour la même zone d'écran à la trame précédente et, en cas de variation, cette variation est prise en compte dans l'élaboration de la nouvelle valeur mémoire avec un retard de plusieurs trames, au moins si cette variation est une augmentation ;

- à comparer ladite valeur courante à ladite valeur mémoire pour produire un signal d'apparition de l'organe pointeur si la valeur courante est supérieure à la valeur mémoire d'au moins un seuil déterminé ;

- et à utiliser ce signal d'apparition de l'organe pointeur pour déterminer la position de cet organe sur l'écran par référence dans le temps par rapport à la séquence de balayage.

Dans la mise en oeuvre pratique de ce procédé, la valeur courante est avantageusement déterminée par conversion analogique numérique en divisant le signal en une série d'éléments de signal de durée déterminé. Ceci correspond à un démultiplexage fictif décomposant la surface de l'écran en éléments différents. La durée de chaque élément de signal ainsi distingué peut éventuellement être celle des portions de signal mentionnées ci-dessus, de sorte que chaque zone d'écran correspond alors à un élément d'écran. Toutefois, dans un mode de mise en oeuvre préféré de l'invention, la durée de chaque zone est un multiple de la durée de chaque élément.

Autrement dit, la valeur de zone qui intervient dans l'élaboration de la valeur mémoire peut être directement identique à une valeur d'élément qui constitue la valeur courante, mais en général, on a plutôt intérêt à ce que dans chaque ligne de balayage, chaque zone recouvre plus d'un élément, ce qui permet de conserver la sensibilité de lecture de l'écran tout en diminuant la capacité de mémoire nécessaire pour enregistrer à chaque trame les valeurs mémoire des différentes zones pour rendre cette capacité de mémoire plus aisément compatible avec les exigences d'une application industrielle. Il est alors avantageux, suivant une caractéristique secondaire de l'invention, d'utiliser comme valeur de zone pour l'élaboration de la valeur mémoire, une valeur de crête déterminée dans l'étape d'évaluation de sorte qu'elle corresponde au niveau le plus élevé du signal dans les éléments de la zone, et d'utiliser comme valeur courante, pour comparaison à cette valeur mémoire, celle de chacun des éléments.

L'élaboration de la valeur mémoire peut également prendre en compte la valeur moyenne des niveaux de tous les éléments de la zone.

Naturellement, l'invention a également pour objet un dispositif d'exploitation du signal d'écran d'un écran tactile de type optique, lequel est essentiellement constitué de moyens de mise en oeuvre des différentes étapes de procédé qui sont individuellement en eux-mêmes classiques, mais qui sont combinés ensemble pour convenir à la mise en oeuvre de ce procédé.

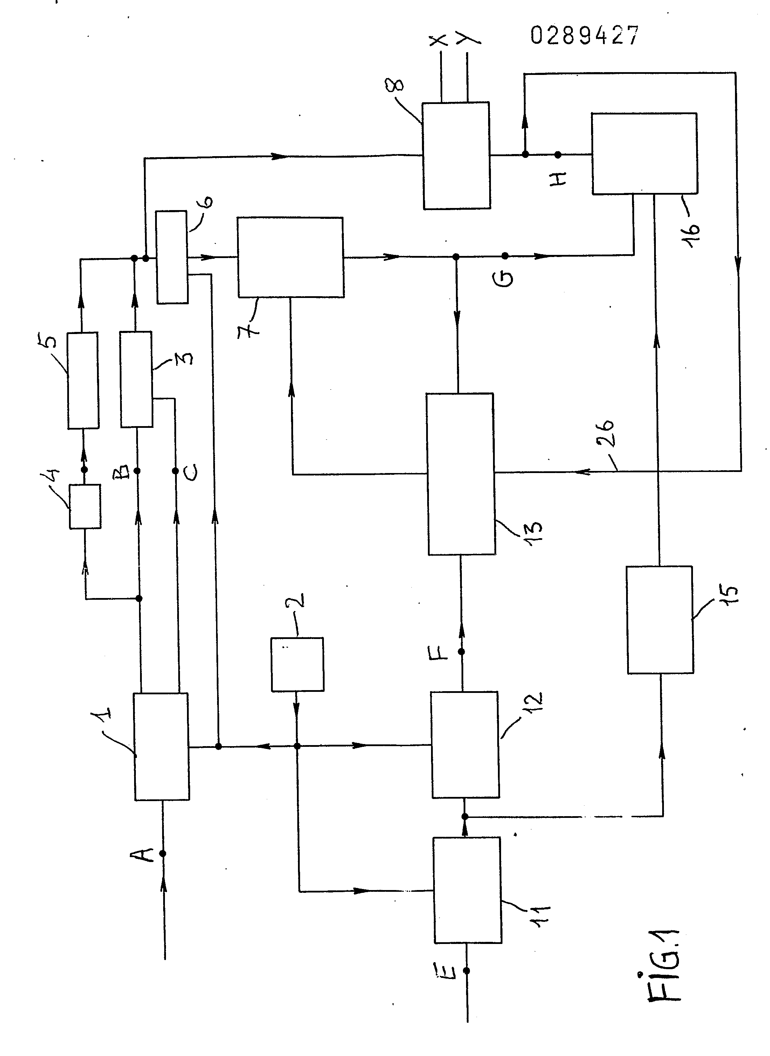

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les figures 1 à 4, dans lesquelles :

- la figure 1 illustre par un schéma fonctionnel la constitution d'un dispositif de mise en oeuvre du procédé de l'invention ;

- la figure 2 montre schématiquement la forme de divers signaux obtenus dans ce procédé.

- la figure 3 représente l'évolution des différents signaux obtenus dans le dispositif sur plusieurs trames successives ;

- la figure 4 représente schématiquement ces mêmes signaux sur une durée plus longue.

Le dispositif suivant l'invention est représenté schématiquement sur la figure 1 dans sa constitution fonctionnelle. Il ne sera pas nécessaire de le décrire dans les détails de sa réalisation matérielle, étant donné que tous les éléments utilisés, ou utilisables, sont en eux-mêmes classiques. On remarquera cependant que l'ensemble présente l'avantage de pouvoir être réalisé aisément en circuits logiques câblés.

Ce dispositif est destiné à être couplé à un écran tactile de type optique. Il existe différentes variantes de réalisation de tels écrans, dont il suffit de retenir ici que leur fonctionnement implique toujours :

- d'une part l'utilisation d'un signal vidéo composite qui sert à commander le pinceau lumineux d'un moniteur à tube cathodique éclairant l'écran, pour faire apparaître sur cet écran une image obtenue par balayage, ligne à ligne et trame par trame ;

- la production d'un signal d'écran, issu de détecteurs sensibles à la lumière transmise par une plaque transparente guide d'ondes placée devant l'écran.

Le signal vidéo composite contient des informations de synchronisation, plus particulièrement les tops de synchronisation ligne et les tops de retour trame de la séquence de balayage. Le signal d'écran traduit, par une augmentation de niveau du signal, la présence en contact avec la plaque transparente d'un organe pointeur, tel que le doigt de l'utilisateur, qui renvoie par diffusion une partie de la lumière du pinceau de balayage dans le guide d'ondes. L'exploitation de ce signal dans le dispositif de l'invention a pour but de déceler cette présence, ou plus exactement l'apparition du doigt, pour en déterminer la position dans le temps d'une ligne et dans le temps d'une trame et d'en déduire la position sur l'écran par référence aux informations de synchronisation de la séquence de balayage.

Le procédé mis en oeuvre par le dispositif de la figure 1 comporte certaines étapes qui sont en elles-mêmes classiques.

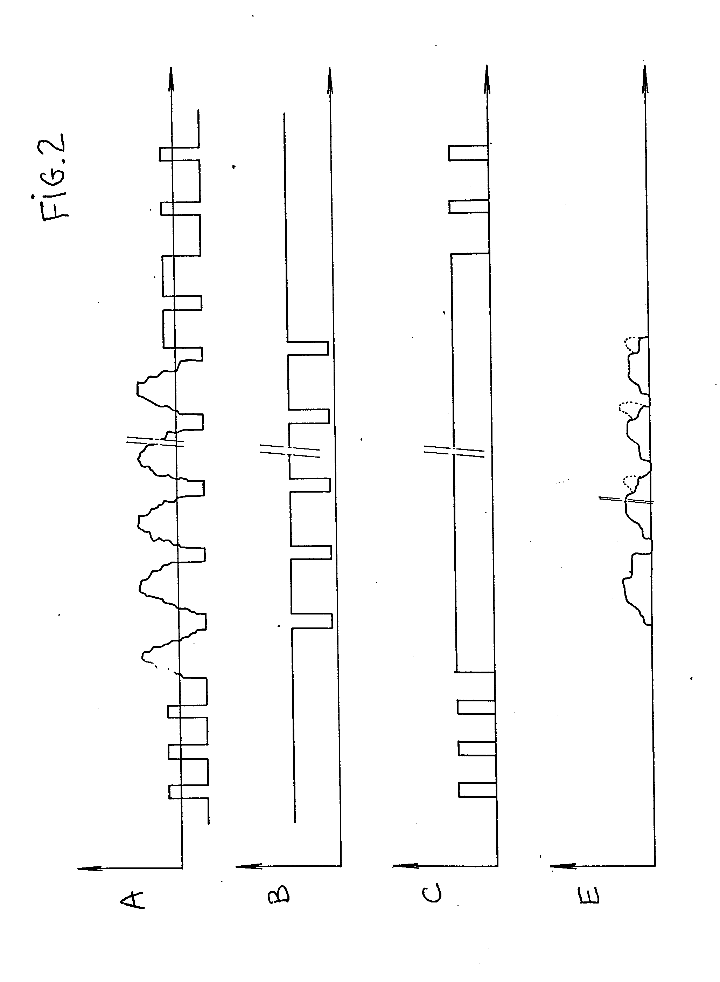

Il en est ainsi du traitement du signal vidéo composite A. Celui-ci comporte un circuit d'extraction des informations de synchronisation 1 qui, sous la commande d'une horloge 2, produit un signal de synchronisation ligne B et un signal de synchronisation trame C. Les trois signaux A, B et C sont représentés sur la figure 2. Le signal B incrémente à chaque ligne un compteur 3 qui est remis à zéro à chaque top de retour trame par le signal C. L'état de ce compteur 3 indique donc, par le nombre de lignes sur la trame, la position en trame. Par ailleurs le signal B passe parallèlement par un multiplicateur de fréquence 4 pour incrémenter un autre compteur 5, dont l'état représente par conséquent, la position sur la ligne.

Le signal d'état du compteur 5 (position en ligne) et le signal d'état du compteur 3 (comptage des lignes sur chaque trame) sont mélangés et utilisés avec le signal d'horloge dans un circuit logique d'adressage 6 qui commande les circuits d'un plan mémoire 7, lequel sera décrit plus loin.

Les mêmes signaux d'état des compteurs 3 et 5 mélangés sont utilisés d'autre part, d'une manière en elle-même classique, pour constituer les références de synchronisation qui permettent, dans un circuit de mémoire tampon 8, de calculer les coordonnées X et Y du doigt pointeur, en ligne et en trame, à partir des informations contenues dans un signal H produit par le traitement du signal d'écran.

Le signal d'écran E présente une forme telle que celle qui est schématiquement illustrée par la quatrième courbe de la figure 2, avec des variations de niveau qui apparaissent à titre d'exemple pour quatre lignes de balayage sur une même trame. Les variations illustrées en trait plein sont des fluctuations qui doivent être négligées dans la détection du contact d'un doigt sur l'écran. On a représenté en pointillés les variations supplémentaires qui sont significatives de la présence du doigt. Cette présence du doigt se traduit sur plusieurs lignes successives, compte tenu de la surface occupée par le doigt sur l'écran.

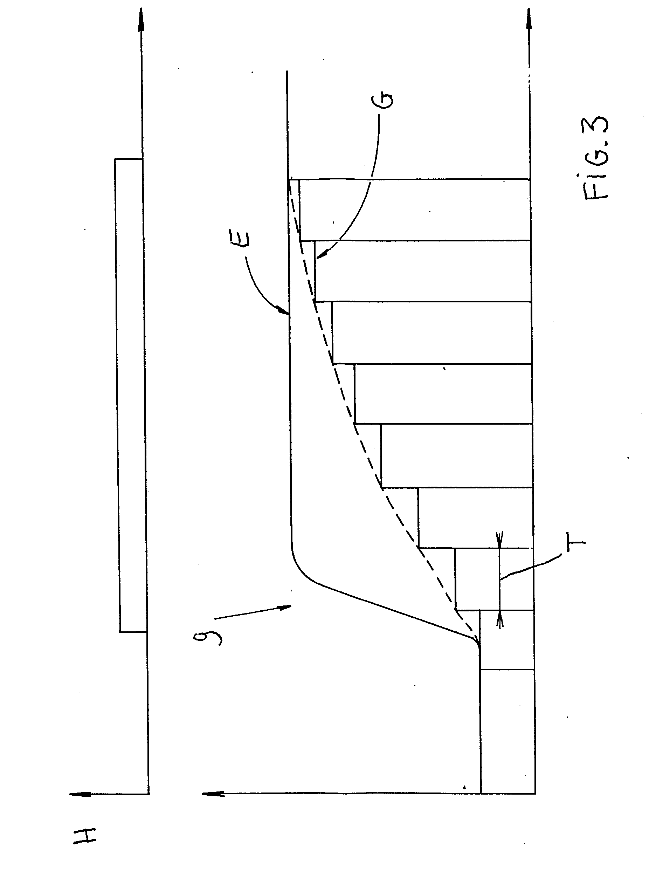

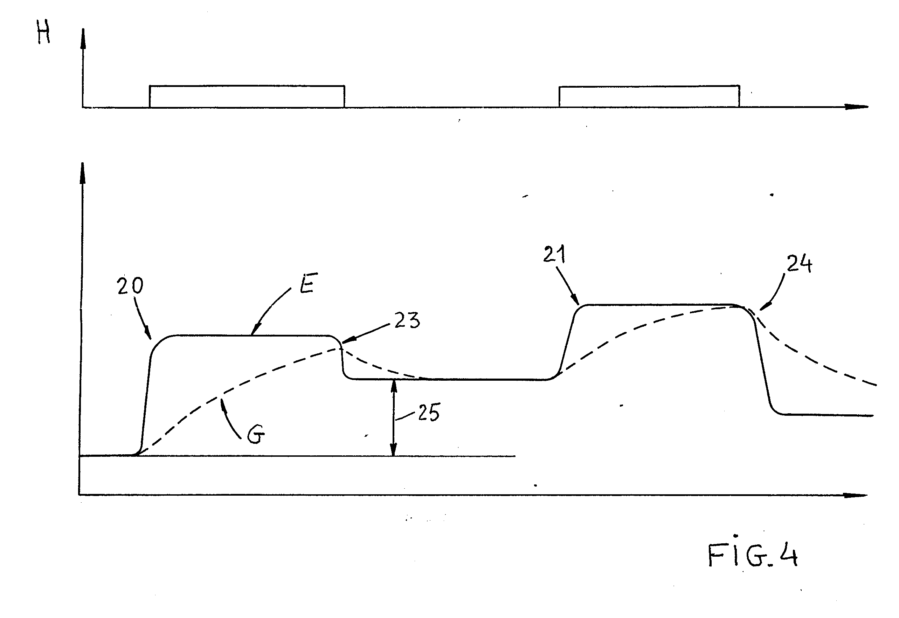

Cette même présence d'un doigt se traduit également dans le temps sur plusieurs trames successives, en fonction de la durée pendant laquelle le doigt reste sur l'écran. Ceci apparaît sur les figures 3 et 4, où l'on a représenté pour un exemple les variations de niveau que subit le signal d'écran E en passant dans le temps sur les trames successives pour un même point de l'écran. Les signaux représentés sur ces figures 3 et 4 sont donc des signaux supposés démultiplexés, bien que le démultiplexage reste fictif. Le signal considéré étant celui qui est issu d'un point déterminé de l'écran, il est donc représenté au niveau qu'il prend à chaque trame à l'instant correspondant à ce point dans la séquence de balayage, dans son évolution sur une série de trames successives.

Pour examiner cette évolution sur plusieurs trames successives et distinguer les augmentations de niveau rapides dues au contact du doigt des fluctuations plus lentes non significatives conformément au procédé de l'invention, il convient d'opérer ce démultiplexage fictif. A cet effet le dispositif comporte un convertisseur analogique numérique 11 qui, sous la commande de l'horloge 2, décompose le signal en une série d'éléments de durée déterminée à chacun desquels est attribuée une valeur numérique en fonction du niveau du signal à l'instant correspondant. Cette valeur numérique, dite valeur d'élément, exprime donc le niveau du signal pour un élément d'écran caractérisé par sa position en ligne et en trame, et ceci à chacune des trames de balayage successives.

Le signal issu du convertisseur 11 est transmis à un détecteur de crête 12. Celui-ci a pour rôle de regrouper les éléments en des portions de signal successives de durée déterminée, multiple de celle d'un élément, qui correspondent donc à chaque trame à des zones d'écran différentes recouvrant chacune un certain nombre d'éléments. Périodiquement au rythme des zones successives de chaque trame, sous la commande de l'horloge 2, il détermine la valeur de crête correspondant au niveau maximal atteint par le signal dans une zone déterminée, cette valeur étant égale à la valeur d'élément de l'élément qui présente le niveau le plus élevé parmi les éléments de la zone, et il retient cette valeur de crête en tant que valeur de zone dans le signal F produit. L'information contenue dans ce signal F représente ainsi les variations de niveau du signal d'écran par des gradins successifs s'étendant chacun sur la durée d'une zone.

Les valeurs de zone du signal F sont alors traitées dans un opérateur de convergence 13 pour donner lieu à des valeurs mémoire et les valeurs mémoire ainsi élaborées sont enregistrées dans le plan mémoire 7. Celui-ci enregistre individuellement les différentes valeurs de zone qu'il reçoit pendant tout le temps d'une trame déterminée. A la trame suivante, ces valeurs sont extraites successivement et réutilisées par l'opérateur de convergence 13, et progressivement remplacées par les nouvelles valeurs mémoire élaborées.

L'opérateur de convergence 13 remplit la fonction d'un filtre récursif. Il est programmé pour réaliser, à chaque trame et pour chaque zone, un algorithme prenant en compte la valeur de zone $\underline{a}$ de la trame en cours de traitement et la valeur mémoire correspondante $\underline{b}$ en sortie du plan mémoire 7 (qui est donc la valeur mémoire enregistrée pour la même zone lors du traitement de la trame précédente), et calculant la nouvelle valeur mémoire à enregistrer par une formule du type :

$c = [(a - b)/m] + b$, avec arrondi à la valeur supérieure du résultat de la division par $\underline{m}$ avant son addition à $\underline{b}$.

La mise en oeuvre de cet algorithme correspond à appliquer un facteur réducteur à toute variation de la valeur de zone constatée entre une trame et la suivante, avant de prendre en compte la variation ainsi réduite dans le calcul de la valeur mémoire élaborée concomitamment pour la zone considérée. A la sortie du plan mémoire 7, dans le signal G, on ne retrouvera dans sa totalité une variation qu'a pu subir le signal d'écran d'une trame à l'autre qu'avec un retard de plusieurs trames. Ce retard doit aller au moins d'une première trame à la troisième trame suivante (deux trames après), et c'est ce que l'on a exprimé ici par un retard de plusieurs trames. Mais en pratique, il s'étend sur un plus grand nombre de trames, chaque fois que le contact d'un doigt sur l'écran provoque, comme il apparaît en 9 sur la figure 3, une augmentation de niveau brusque du signal E, avec un front de montée rapide et un maintien au niveau élevé pendant un temps de plusieurs trames. Sur cette figure 3 on a représenté l'évolution du signal G en correspondance avec celle du signal E. Le temps d'une trame apparaît en T.

De plus, par l'application de la formule ci-dessus, le retard ne portera pas globalement sur la totalité de la différence de niveau constatée, mais il est en fait étalé dans le temps et réparti sur les trames affectées par la variation. Si l'on considère la variation lissée illustrée en traits interrompus sur la figure, on voit que lors d'une brusque variation de niveau du signal d'écran (valeur de zone passant de b à a) la valeur mémoire (c) varie plus lentement (par cumul des différences affectées du facteur réducteur) pour converger vers la valeur élevée (a) au bout d'un nombre de trames qui est fonction de la valeur de m dans la formule ci-dessus. On peut donc considérer que le signal G est équivalent à celui qui serait obtenu par filtrage du signal E par un filtre passe-bas de constante de temps approximativement égale à m/2 trames. Il faut cependant noter que cette opération est entièrement numérique et qu'elle est réalisée indépendamment pour les différentes zones donnant lieu à enregistrement dans le plan mémoire.

Dans la formule appliquée par l'opérateur de convergence, m peut être un nombre fixe auquel on donne à l'avance une valeur quelconque au moins égale à 2, et de préférence comprise entre 5 et 20. Cependant on peut aussi avoir avantage à modifier l'algorithme pour y introduire une loi de variation de la valeur de m en fonction de la différence (a - b), ce qui équivaut à réaliser un filtrage non linéaire permettant un comportement différent du filtre pour les variations plus ou moins petites ou grandes du niveau du signal.

La dernière étape de traitement du signal d'écran dans le dispositif de la figure 1 se déroule dans le comparateur 16. Il s'agit d'un comparateur numérique qui fonctionne en conjonction avec une table de conversion 15 pour examiner corrélativement la valeur courante du signal d'écran, exprimée par la valeur d'élément à chaque instant, et la valeur mémoire élaborée à la trame précédente pour la zone qui englobe l'élément considéré, et pour émettre dans le signal produit H une impulsion d'intensité fixe prédéterminée et de durée égale à celle d'un élément dans le balayage, pour tout élément où la comparaison entre ces deux valeurs fait apparaître que la valeur d'élément dépasse la valeur mémoire, dans le sens d'une augmentation de la valeur mémoire à la valeur d'élément, et ce avec une différence supérieure à un seuil minimal déterminé.

Dans le mode de réalisation particulier du dispositif illustré par la figure 1, ce seuil n'est pas égal à une valeur fixe prédéterminée comme il pourrait l'être dans d'autres formes de réalisation, mais plutôt à une valeur variable en fonction du niveau du signal, et de plus ce seuil est introduit sur la valeur courante avant son admission dans le comparateur 16 plutôt que dans ce comparateur lui-même. C'est là le rôle que remplit la table de conversion 15. Celle-ci corrige la valeur d'élément en la multipliant par un facteur constant prédéterminé qui est choisi légèrement inférieur à 1, et égal par exemple à 0,9. La valeur d'élément ainsi corrigée est celle qui intervient dans la comparaison avec la valeur mémoire effectuée par le comparateur 16.

Dans les signaux démultiplexés fictivement sur les trames successives pour un même élément d'écran, tel que représenté sur les figures 3 et 4, on a fait apparaître la forme que prend le signal H, en parallèle avec l'évolution de la valeur courante dans le signal E et avec l'évolution de la valeur mémoire dans le signal G, ce dernier étant représenté sur la figure 4 par son enveloppe en traits interrompus. Conformément à ces figures, le signal H est créé à sa valeur positive constante dès le début du contact d'un doigt (en 20 et 21 sur la figure 4) et il disparaît pratiquement à la fin de ce contact (en 23 et 24 sur la figure 4). On remarquera cependant que ce signal ne traduit pas véritablement la présence d'un doigt sur l'écran, mais plutôt son apparition, puisqu'il s'annule quand, par l'opérateur de convergence, la différence entre valeur courante et valeur mémoire devient inférieure au seuil minimal. Ceci permet aussi que le doigt laisse des salissures sur l'écran après un premier contact et que le signal d'écran conserve un niveau relativement important (en 25 sur la figure 4), sans que pour autant ceci soit pris en considération par le dispositif comme significatif de la présence d'un doigt. Il en est de même quand la valeur courante du signal d'écran dérive dans le temps par suite d'interventions autres que le contact d'un doigt, car dans ce cas les fluctuations de niveau sont relativement lentes, et l'étape de filtrage réalisée par l'opérateur de convergence sur toute augmentation de niveau décelée d'une trame à la suivante conduit à des différences entre valeur mémoire et valeur de zone qui restent faibles, et que le comparateur final négligera comme étant inférieures à la différence entre la valeur mémoire et la valeur courante corrigée par le seuil. Dans tous les cas, l'étape d'évaluation des valeurs de zone réalisée par le détecteur de crête sur un groupe de valeur d'élément permet d'estomper l'effet que pourraient avoir des réductions intempestives du niveau du signal dans l'espace, entre les divers éléments d'écran d'une même zone.

En revenant maintenant à la conception du dispositif selon l'invention, dans la forme de réalisation particulière décrite en référence à la figure 1, il convient de relever que ce dispositif comporte un perfectionnement illustré schématiquement par une ligne 26, qui transmet le signal d'apparition du doigt pointeur H à l'opérateur de convergence 13. A chaque apparition du doigt dans une zone d'écran, ce signal bloque le calcul de la valeur mémoire pour la zone correspondante pendant un temps égal à la durée de traitement d'un nombre de trames consécutives prédéterminées. Cette disposition tend à retarder alors, de ce nombre de trames, toute augmentation subséquente de la valeur mémoire suivant celle de la valeur courante et de la valeur de zone. Elle revient à allonger automatiquement le temps de persistance du signal H, au cas où le signal d'écran ne se maintiendrait pas assez longtemps à un niveau suffisamment élevé. L'avantage est alors que l'exploitation ultérieure du signal H s'en trouve facilitée.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

**Revendications**

1. Procédé d'exploitation d'un signal d'écran (E) produit par un écran tactile de type optique, en synchronisme avec une séquence de balayage trame par trame de l'écran, pour y déceler la position d'un organe pointeur amené sur l'écran, caractérisé en ce qu'il consiste essentiellement, pour une série de portions du signal de durée déterminée à chaque trame, provenant de zones d'écran différentes, à examiner les variations de niveau du signal sur au moins trois trames successives, et à produire un signal d'apparition de l'organe pointeur (H) sélectivement lorsque cet examen fait apparaître une augmentation de niveau à la fois relativement importante et de progression relativement rapide par rapport à des fluctuations non significatives.

2. Procédé suivant la revendication 1, caractérisé en ce que ledit examen s'effectue en comparant répétitivement à chaque trame une valeur courante du signal à une valeur mémoire qui est élaborée pour chaque zone d'écran et à laquelle on applique les variations de niveau du signal en en différant une partie d'un retard de plusieurs trames, au moins si ces variations sont des augmentations, et en ce que ledit signal d'apparition de l'organe pointeur est produit si la valeur courante est supérieure à la valeur mémoire d'au moins un seuil déterminé.

3. Procédé suivant la revendication 2, caractérisé en ce que pour chaque comparaison à la valeur courante, ladite valeur mémoire est identique en niveau à ce qu'était la valeur courante pour la même zone plusieurs trames auparavant dont le nombre est fonction des parties desdites variations de niveau auxquelles est appliqué ledit retard.

4. Procédé suivant la revendication 2, caractérisé en ce que l'on détermine la valeur maximale atteinte par la valeur courante du signal dans la zone considérée sur un groupe de plusieurs trames, et l'on utilise cette valeur maximale comme valeur mémoire dans l'examen du groupe suivant de trames.

5. Procédé suivant la revendication 2, caractérisé en ce que ledit retard est obtenu en cumulant dans la valeur mémoire de chaque zone d'écran les différences de niveau du signal de la zone concernée constatées d'une trame à la suivante après leur avoir appliqué un facteur réducteur à chaque trame.

6. Procédé suivant la revendication 1, caractérisé en ce qu'il consiste principalement :

- à attribuer en permanence ladite valeur courante au signal d'écran en fonction de son niveau à chaque instant ;

- à soumettre le signal d'écran répétitivement pour chaque trame à un traitement de ladite série de portions du signal, de durée déterminée, provenant de zones d'écran différentes, ledit traitement comportant au moins :

. une étape d'évaluation consistant à attribuer à chacune desdites portions une valeur de zone en fonction du niveau du signal à chaque instant ;

. une étape de mémorisation consistant à enregistrer, jusqu'à la trame suivante, des valeurs mémoire élaborées respectivement à partir desdites valeurs de zone ;

. une étape de filtrage, où chaque valeur de zone est comparée à la valeur mémoire enregistrée pour la même zone d'écran à la trame précédente et, en cas de variation, une partie de cette variation est prise en compte dans l'élaboration de la nouvelle valeur mémoire avec un retard de plusieurs trames, au moins si cette variation est une augmentation ;

- à comparer ladite valeur courante à ladite valeur mémoire pour produire ledit signal d'apparition de l'organe pointeur si la valeur courante est supérieure à la valeur mémoire d'au moins un seuil déterminé ;

- et à utiliser ce signal d'apparition de l'organe pointeur pour déterminer la position de cet organe sur l'écran par référence dans le temps par rapport à la séquence de balayage.

7. Procédé selon la revendication 6, caractérisé en ce que ladite valeur courante est constituée de valeurs d'élément successives, attribuées respectivement à des éléments de signal de durée déterminée correspondant à des éléments d'écran différents.

8. Procédé suivant la revendication 7, caractérisé en ce que la durée desdites portions de signal est un multiple de la durée desdits éléments de signal, chaque zone d'écran recouvrant ainsi plus d'un élément d'écran.

9. Procédé suivant la revendication 8, caractérisé en ce que la valeur de zone est une valeur de crête déterminée dans l'étape d'évaluation de sorte qu'elle corresponde au niveau le plus élevé du signal dans les éléments de la zone.

10. Procédé selon l'une quelconque des revendications 6 à 9, caractérisé en ce que ledit seuil est introduit dans la valeur courante, en multipliant celle-ci par un facteur inférieur à 1.

11. Dispositif d'exploitation d'un signal d'écran produit par un écran tactile, caractérisé en ce qu'il comporte des moyens de mise en oeuvre du procédé selon l'une quelconque des revendications 1 à 10.

12. Dispositif selon la revendication 11, caractérisé en ce qu'il comporte un opérateur de convergence (13) qui, à partir d'une valeur de zone $a$ et d'une valeur mémoire $b$ déterminées lors du traitement de la trame précédente, élabore une nouvelle valeur mémoire $c$ en réalisant l'algorithme :

$$c = [(a - b)/m] + b$$

où m est un nombre au moins égal à 2 et où le résultat de la division par $m$ est de préférence arrondi à la valeur supérieure avant son addition à $b$.

13. Dispositif selon la revendication 11, caractérisé en ce qu'il comporte en outre des moyens pour bloquer l'augmentation de la valeur mémoire par l'opérateur de convergence, pendant un nombre de trames prédéterminées, sous la commande du signal d'apparition de l'organe pointeur (signal H).

FIG.1

FIG.2

FIG.3

0289427

T

G

E

9

H

H

20 E 21 24

23

25 G

0289427

FIG. 4

Office européen des brevets

RAPPORT DE RECHERCHE EUROPEENNE

Numero de la demande

EP 88 40 1044

## DOCUMENTS CONSÌDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 196 187 (AMERICAN TELEPHONE AND TELEGRAPH CO.) * Résumé; page 6, lignes 3-9; figures 2,3 * | 1-4,6-9 | G 06 K 11/06 |
| A | WO-A-8 600 447 (J.K. CARSTEDT) * Résumé * | 1-4,6-9 | |
| D,A | US-A-4 305 071 (S.W. BELL et al.) * Résumé * | 1-4,6-9 | |

| | | | DOMAINES TECHNIQUES RECHERCHES (Int. Cl.4) |
|---|---|---|---|
| | | | G 06 K 11/06 |

Le présent rapport a été établi pour toutes les revendications

| Lieu de la recherche | Date d'achèvement de la recherche | Examinateur |
|---|---|---|
| LA HAYE | 28-07-1988 | CERVANTES J.P.J. |